# EUROPÄISCHE PATENTSCHRIFT

(11) **EP 0 401 466 B1**
(45) Veröffentlichungstag und Bekanntmachung des Hinweises auf die Patenterteilung: **21.06.1995**
(21) Anmeldenummer: 90102997.5
(22) Anmeldetag: 16.02.1990
(51) Int. Cl.: G06K 19/16

(54) **Schichtverbund mit Beugungstrukturen**
Laminate with diffraction structures
Stratifié avec des structures à diffraction

(30) Priorität: 05.06.1989 CH 2110/89
(43) Veröffentlichungstag der Anmeldung: 12.12.1990
(73) Patentinhaber: Landis & Gyr Technology Innovation AG, 6301 Zug (CH)
(72) Erfinder: Antes, Gregor, CH-8816 Hirzel (CH); Minnetian, Ohannes, Dr., CH-6005 Luzern (CH)
(74) Vertreter: Müller, Hans-Jürgen, Dipl.-Ing.

(56) Entgegenhaltungen:
- EP-A- 0 012 375
- EP-A- 0 201 323
- EP-A- 0 271 673

## Beschreibung

Die Erfindung bezieht sich auf einen Schichtverbund der im Oberbegriff des Anspruchs 1 genannten Art.

Ein solcher Schichtverbund wird vorteilhaft zur Erhöhung der Fälschungssicherheit von Dokumenten aller Art verwendet, wobei der Schichtverbund mit seinen auffälligen optisch variablen Mustern (optically variable device) auf das Dokument aufgeklebt wird.

Der Schichtaufbau von verschieden ausgestalteten Heissprägefolien mit Hologrammen ist z. B. aus der EP 170 832 A1 bekannt. Sie zeichnen sich durch eine Trägerfolie und einen Schichtverbund aus, der eine Trennschicht, eine Lackschicht, die das Hologramm enthält, und eine Kleberschicht umfasst. Die Trennschicht verbindet die Trägerfolie mit dem Schichtverbund solange, bis er auf ein Substrat geklebt ist. Durch die Trägerfolie, die Trennschicht und die Lackschicht hindurch wird die Kleberschicht erwärmt und ein hohes Haftvermögen auf dem Substrat erzielt. Nach dem Aufkleben ermöglicht die Trennschicht, dass sich die Trägerfolie leicht vom Schichtverbund löst, der jetzt mit dem Substrat fest verbunden ist.

Aus der DE-OS 35 27 412 ist eine fünflagige Folie bekannt, die zwei Lackschichten aufweist, deren optische Eigenschaften sich deutlich unterscheiden und eine Dekorschicht bilden.

Bei Kennkarten werden die einzelnen Schichten oft in einem Raster verklebt, damit bei einem unerwünschten Auftrennen der Schutzschichten eine oder mehrere dünne Zwischenschichten an vorbestimmten Stellen zerreissen. Die EP-253 089 A1 beschreibt diese Technik zum Schutz von optischen Markierungen, während die Sicherheit eines zwischen Folien kaschierten Ausweises aus Papier gemäss der US-PS 4,057,919 erhöht werden kann.

Verschiedene Prägeverfahren zum kostengünstigen Vervielfältigen von optischen Beugungsstrukturen in thermoplastische Oberflächen sind beispielsweise in den CH-PS 661 683, CH-PS 595 664 und CH-PS 594 936 beschrieben.

EP-A-0 201 323 zeigt einen mit optischen Mustern versehenen Schichtverbund, bei dem eine ein Relief bildende Reflexionsschicht (4) zwischen Kunststoffschichten (3, 5) angeordnet und der Schichtenverbund mit einer transparenten Abdeckschicht überzogen ist und bei dem eine bei Aktivierungstemperaturen thermisch aktivierbare Kleberschicht (6) zum Verbinden des Schichtverbunds mit einem Substrat (9) dient.

Der Erfindung liegt die Aufgabe zugrunde, einen Schichtverbund mit optischen Beugungsstrukturen zum Aufkleben auf ein Substrat zu schaffen, der unter Einwirkung von Wärme aufgeklebt werden kann und dessen Beugungsstrukturen beim Versuch des Ablösens des Schichtverbunds sicher zerstört werden.

Die genannte Aufgabe wird erfindungsgemäss durch die Merkmale des Anspruchs 1 gelöst. Vorteilhafte Ausgestaltungen ergeben sich aus den Unteransprüchen.

Nachfolgend werden Ausführungsbeispiele der Erfindung anhand der Zeichnungen näher erläutert.

Es zeigt:
- Figur 1: einen Querschnitt durch einen auf ein Substrat geklebten Schichtverbund,
- Figur 2: den ausgestanzten Schichtverbund als Marke auf einem Träger,
- Figur 3: den Schichtverbund nach Figur 1 mit Inhomogenitäten in einer Zwischenschicht und in einer Kleberschicht,
- Figur 4a: den Schichtverbund nach Figur 1 mit Trenninseln auf der Kleberschicht vor dem Aufkleben,
- Figur 4b: den Schichtverbund nach Figur 4a nach dem Aufkleben,
- Figur 5: eine Anordnung der Trenninseln zwischen einer zweiten Lackschicht und der Kleberschicht sowie
- Figur 6: einen mittels der Marke gesicherten Ausweis.

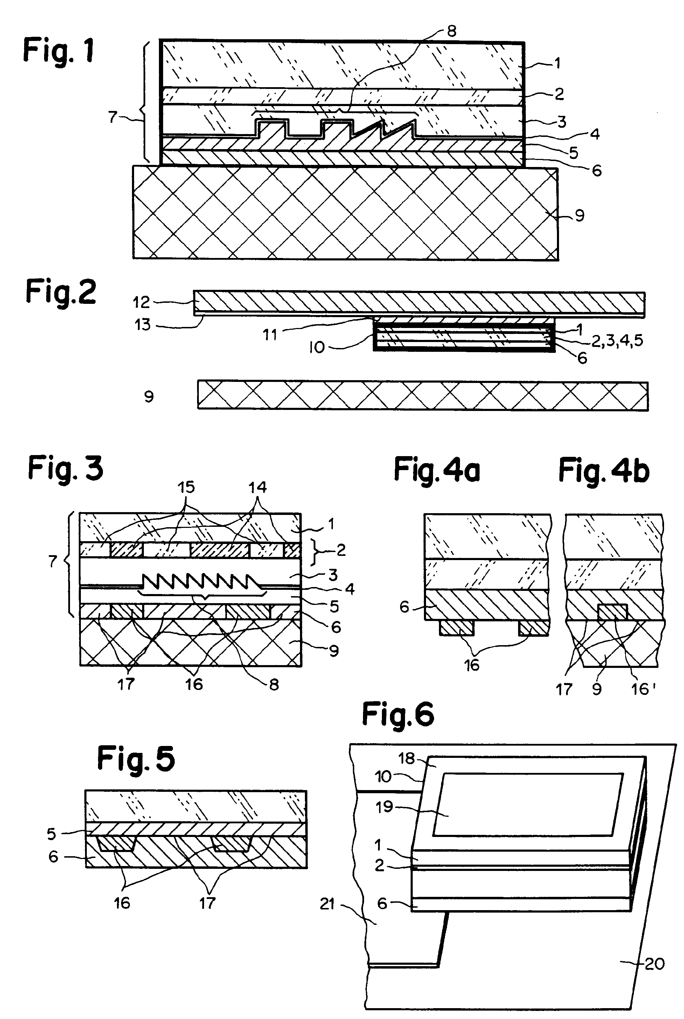

In der Figur 1 bedeutet 1 eine Stabilisationsschicht, auf der in der angegebenen Reihenfolge eine Zwischenschicht 2, eine erste Lackschicht 3, eine reflektierende Reflexionsschicht 4, eine zweite Lackschicht 5 und eine Kleberschicht 6 aufgebracht sind. Die Schichten 1 bis 6 bilden einen Schichtverbund 7. Zwischen den Lackschichten 3 und 5 sind optische Beugungsstrukturen 8 eingebettet, z. B. Gitter, Hologramme, KINEGRAM®-Strukturen usw.. Mit der Kleberschicht 6 wird der Schichtverbund 7 auf einem Substrat 9 befestigt.

Die Beugungstrukturen 8 werden durch die Stabilisationsschicht 1, die Zwischenschicht 2 und die Lackschicht 3 hindurch beleuchtet. Das gebeugte und reflektierte Licht wird durch die Schichten 1 bis 3 hindurch zum Betrachter zurückgeworfen.

Die Stabilisationsschicht 1 besteht mit Vorteil aus einer warmfesten, klaren Folie von hoher optischer Qualität. Verwendbar ist die Folie sowohl in einer farblosen als auch in einer eingefärbten Ausführung. Als Folienmaterial ist beispielsweise Polyester sehr geeignet, das sich neben der hohen optischen Qualität durch eine hohe Zugfestigkeit und eine hohe Temperaturbeständigkeit auszeichnet. Diese Folien sind auf Rollen in verschiedener Dicke handelsüblich, so dass mit Vorteil, wie weiter unten ausgeführt, mittels einer hier nicht gezeigten Umrollanlage auf einer Seite der Stabilisationsschicht 1 der Schichtverbund 7 aufgebaut wird. Vorteilhaft weisen die Folien eine Dicke von 9 bis 30 Mikrometer auf, damit sie einerseits genügend fest sind und andererseits auf dem Substrat 9 nicht zu stark auftragen.

Als Zwischenschicht 2 ist ein Haftvermittler (Primer) ganzflächig auf der Stabilisationsschicht 1 aufgebracht. Der Haftvermittler bewirkt ein hohes Haftvermögen zwischen der Stabilisationsschicht 1 und der nachfolgenden Lackschicht 3. Als Haftvermittler dient vorteilhaft ein Lack auf der Basis von Polyurethan, damit die Zwischenschicht 2 gegen Licht, vorallem gegen ultraviolettes Licht, und gegen Lösungsmittel beständig ist. Die Zwischenschicht 2 weist eine Auftragsdicke im Mikrometerbereich auf, vorzugsweise 0,8 bis 2 Mikrometer. Vorteilhaft sind für die Stabilisationsschicht 1 auch Folien verwendbar, die bereits beim Lieferant mit der Zwischenschicht 2 überzogen wurden.

Die Lackschicht 3 kann auch direkt auf die Stabilisationsschicht 1 aufgetragen sein, falls das Haftvermögen der Lackschicht 3 auf der Folie genügt. Vorteilhaft kann das Haftvermögen mittels einer Vorbehandlung der Stabilisationsschicht 1, z. B. in einer Korona- oder Plasmaentladung, erhöht werden. Eine Grenzschicht zwischen der Lackschicht 3 und der Stabilisationsschicht 1 bzw. eine durch die Vorbehandlung veränderte Oberflächenschicht der Folie übernimmt in diesen Beispielen die Funktion der Zwischenschicht 2.

Die erste Lackschicht 3 ist vorteilhaft in mindestens einem Arbeitsgang aufgetragen und weist eine Schichtdicke zwischen 0,5 und 1,0 Mikrometer, vorzugsweise 0,6 Mikrometer, auf.

Anschliessend wird die Reflexionschicht 4 auf die Lackschicht 3 aufgebracht, die mit Vorteil mittels einer Koronaentladung vorbehandelt ist, um eine gute Haftung der Reflexionsschicht 4 auf der Lackschicht 3 zu bewirken. Vorzugsweise ist als Reflexionsschicht 4 ein Metall aufgedampft, beispielsweise Aluminium, das kostengünstig ist und sichtbares sowie infrarotes Licht schon in dünnen Schichten gut reflektiert. Für eine metallische Reflexionsschicht 4 reicht eine Dicke von weniger als 30 Nanometern aus; bei Aluminium beträgt sie etwa 15 Nanometer.

Vorteilhaft eignet sich auch ein Dielektrikum als Reflexionsschicht 4, mit einer Brechzahl die möglicht stark von den benachbarten Schichten 3 und 5 abweicht, da die Beugungsstrukturen 8 teilweise transparent sind und darunter liegende Materialien, z. B. ein Bild, nicht vollständig verdecken.

Mit einem der oben erwähnten Prägeverfahren ist das Reliefprofil wenigstens einer optischen Beugungsstruktur 8 mit einer geheizten Matrize durch die Reflexionsschicht 4 hindurch in die Lackschicht 3 eingeprägt. Quer zur Laufrichtung des Folienbandes erfolgt vorteilhaft das Einprägen einer vorbestimmten Anzahl von Beugungsstrukturen 8 gleichzeitig.

Es ist auch möglich, die Beugungsstruktur 8 direkt in die Lackschicht 3 einzuprägen, bevor die Reflexionsschicht 4 aufgebracht ist.

Das Relief der Beugungsstrukturen 8 weist eine typische Profilhöhe von etwa 0,5 Mikrometer auf. Ein Auftrag der zweiten Lackschicht 5 von etwa 0,15 bis 1,5 Mikrometer Dicke (z. B. 1 Mikrometer) ebnet das Relief völlig ein. Mit Vorteil wird für beide Lackschichten 3 und 5 das gleiche thermoplastische Material verwendet, beispielsweise ein Acrylpolymerlack.

Der Acrylpolymerlack wird so ausgewählt, dass die vom Prägen in der Lackschicht 3 verbliebenen mechanischen Spannungen bei einer Erwärmung im Bereich von 150° bis 160°C die in der Lackschicht 3 eingeprägten Beugungsstrukturen 8 zerstören.

Der Acrylpolymerlack der Lackschicht 3 kann so eingefärbt werden, dass sie wenigstens in einem vorbestimmten Teil des Lichtspektrums transparent ist. Die Beugungsstruktur 8 bleibt in einer vorbestimmten Farbe maschinell oder visuell auslesbar. Ist beispielsweise der Farbstoff nur für infrarotes Licht durchlässig, ist die Beugungsstruktur 8 dem unbewaffneten Auge verborgen und nur mittels eines hier nicht gezeigten Lesegerätes erkennbar, das die Anwesenheit der Beugungsstruktur 8 festzustellen vermag.

Die abschliessend aufgebrachte Kleberschicht 6 von typisch weniger als 6 Mikrometer Dicke ermöglicht das Aufkleben des Schichtverbundes 7 auf das Substrat 9. Die Schichtdicke der Kleberschicht 6 ist vorteilhaft der Oberflächenbeschaffenheit des Substrates 9 angepasst. Bei glatten Substraten 9, wie z. B. bei Photopapieren, reichen 3 Mikrometer Dicke der Kleberschicht 6 aus, während die Kleberschicht 6 bei einem rauhen Substrat 9 mit Vorteil eine Dicke von 6 Mikrometer oder mehr aufweist. Bei einem Papier mit einer normalen Oberflächenstruktur beispielsweise beträgt die Dicke der Kleberschicht 6 etwa 5 Mikrometer.

Für die Kleberschicht 6 eignen sich mit Wärme aktivierbare Heisskleber, z. B. auf der Basis von Polymethylmethacrylat, die beim Erwärmen ab etwa 110°C ihre Klebkraft entwickeln. Der Schichtverbund 7 kann erst bei einer Temperatur des Heissklebers von mehr als 170°C vom Substrat 9 gelöst werden, ohne dass im Schichtverbund 7 zu grosse, die Schichten 3 bis 5 zerstörende Zugkräfte auftreten.

Beim Aufkleben wird die Kleberschicht 6 durch die Stabilisationsschicht 1 erwärmt, wobei die Stabilisationsschicht 1 die zugeführte Wärme verteilt und sie gleichmässig den Schichten 3 bis 6 zuführt. In der Kleberschicht 6 sind Temperaturen bis zu 140°C erreichbar, ohne dass die Beugungsstruktur 8 Schaden nimmt. Die auf diese Temperaturen abgestimmten Heisskleber der Kleberschicht 6 verbinden sich innig mit dem Substrat 9 und weisen nach dem Erkalten eine so grosse Haftkraft auf, dass z. B. bei einem Ablöseversuch das papierene Substrat 9 beschädigt wird. Ein Ablösen des Schichtverbundes 7 bei 170°C ist nutzlos, da trotz der Stabilisationsschicht 1 die eingeprägten Beugungsstrukturen 8 in den Lackschichten 3, 5 schon bei Temperaturen zwischen 150 und 160°C thermisch irreversibel zerstört werden. Liegen die Temperaturen beim Ablöseversuch etwas unterhalb von 170°C, zerstören die Zugkräfte die weichen Schichten 3 bis 5.

Der fertiggestellte Schichtverbund 7 verlässt die Umrollanlage beispielsweise in Form einer Rolle, die graphische Kompositionen aus Beugungsstrukturen 8 aufweist.

Eine Teilfläche, die z. B. eine in sich abgeschlossene vorbestimmte Komposition aus den Beugungsstrukturen 8 enthält, wird vorteilhaft aus dem Schichtverbund 7 als eine Marke 10 (Figur 2) ausgestanzt oder ausgeschnitten. Die Marke 10 wird auf dem Substrat 9 angeordnet. Ein hier nicht gezeigter, heizbarer Stempel erwärmt die Kleberschicht 6 durch die Schichten 1 bis 5 hindurch, bis die Kleberschicht 6 erweicht und sich mit dem Substrat 9 verklebt. Nach dem Erstarren des Heissklebers ist die Marke 10 fest mit dem Substrat 9 verbunden.

Beispielsweise weist die Marke 10 eine Kreisform von 2 cm Durchmesser auf und ist typisch 25 Mikrometer dick.

Die Marken 10 können auch in anderen Grössen ausgeschnitten werden sowie ovale, rechteckige oder andere Formen der Berandung aufweisen. Ihre Form und ihre Abmessungen sind z. B. durch die graphische Komposition der Beugungsstrukturen 8 (Figur 1) vorbestimmt.

Als Substrate 9 eignen sich beispielsweise Papiere oder Kunststoffe mit unterschiedlicher Oberflächenbeschaffenheit, wie sie bei Photopapieren, Ausweisen, Dokumenten, Wertpapieren, Banknoten usw. auftritt.

Gegenüber dem Stand der Technik weist der Schichtverbund 7 (Figur 1) zusätzlich die Stabilisationsschicht 1 und die Zwischenschicht 2 auf, die mit den Schichten 3 bis 6 ausgeschnitten und auf das Substrat 9 übertragen werden. Diese beiden Schichten 1, 2 weisen den Vorteil auf, dass beim Aufkleben das Auftreten von überhitzten Stellen, in denen die Temperatur mehr als 150°C beträgt, in den Schichten 3 bis 5 vermieden wird, in denen örtlich eine thermische Zerstörung der Beugungsstruktur 8 möglich wäre. Die Stabilisationsschicht 1 ist wärmebeständig genug, um die bei etwa 140°C sehr empfindlichen Schichten 3 bis 5 mechanisch zu stützen, damit die beim Kleben unvermeidlich auftretenden mechanischen Druck- bzw. Scherkräfte die Beugungsstruktur 8 nicht zerstören. Erst die Stabilisationsschicht 1 ermöglicht das Aufkleben der Marke 10 mit einem vorteilhaft abgestimmten Heisskleber bei einer Temperatur, die sehr nahe, aber unterhalb der Zerstörungstemperatur der Beugungsstruktur 8 von 150°C bis 160°C liegt, während das Ablösen vom Substrat 9 erst bei einer deutlich höheren Temperatur möglich ist. Infolge der hohen Zugfestigkeit der Stabilisationsschicht 1 und der zusätzlichen Wirkung der Zwischenschicht 2 werden bei tieferen Temperaturen die bei einem Ablöseversuch angewendeten Zugkräfte in die Schichten 3 bis 6 übertragen. Die Zugkräfte zerstören die Beugungsstrukturen 8 mechanisch. Ein Ablöseversuch mit chemischen Lösungsmitteln für den Heisskleber der Kleberschicht 6 ist auch erfolglos, da diese auch die Lackschichten 3 und 5 zerstören.

Vorteilhaft verhindert die Stabilisationsschicht 1 auch eine mechanische Beschädigung der Beugungsstruktur 8 während des Gebrauchs des mittels der Marke 10 (Figur 2) gesicherten Substrates 9.

In einer Ausführung des Schichtverbunds 7 (Figur 1) weist die Stabilisationsschicht 1 auf der von der Zwischenschicht 2 abgewandten Seite vorteilhaft eine Kaltkleberschicht 11 (Figur 2) auf, damit die Marken 10 nach dem Ausstanzen in einer vorbestimmten Ordnung und Orientierung nur unter Anwendung von Druck auf einen Träger 12 klebbar sind, beispielsweise auf ein silikonisiertes Papier oder auf eine mit Silikon beschichtete klare Polyesterfolie. Diese Polyesterfolie weist den Vorteil auf, dass die Marken 10 durch den Träger 12 hindurch sichtbar sind und sie daher vor dem Aufkleben genau auf dem Substrat 9 angeordnet werden können. Der z. B. zu einer Rolle aufgewickelte Träger 12 mit den Marken 10 ist leicht zu einer hier nicht gezeigten Aufklebemaschine transportierbar. Jede Marke 10 wird einzeln durch den Träger 12 hindurch auf die Klebetemperatur erwärmt und auf das Substrat 9 aufgeklebt. Dabei verändert sich die Kaltkleberschicht 11 nicht, so dass der silikonsierte Träger 12 leicht von der Marke 10 getrennt werden kann.

Beispielsweise kann die Marke 10 vom Träger 12 abgezogen werden und mit der Kaltkleberschicht 11 auf der Heisskleberseite einer klaren Laminierfolie geklebt werden, wie sie zum Heisslaminieren von Bucheinbänden und Ausweisen aller Art verwendet werden. Die Kaltkleberschicht 11 fixiert die Marke 10, bis die Laminierfolie und die Marke 10 gleichzeitig unter der Anwendung von Wärme mit dem Substrat 9 verbunden sind. Vorteilhaft verhindert auch beim Heisslaminieren die Stabilisationsschicht 1 die thermische Zerstörung der Beugungsstrukturen 8, die dies bei Marken 10 nach dem Stand der Technik beobachtet wird.

Mit Vorteil ist der ganze bandförmige Schichtverbund 7 (Figur 1) mit der Kaltkleberschicht 11 (Figur 2) direkt auf den bandförmigen Träger 12 geklebt. Eine hier nicht gezeigte Einrichtung stanzt die Marken 10 aus dem Schichtverbund 7 frei, ohne den Träger 12 zu verletzen. Der nicht benötigte Teil des Schichtverbundes 7, der keine Marken 10 mehr enthält, wird z. B. vom Träger 12 abgezogen. Bis zur Weiterverarbeitung kann mit Vorteil der mit den Marken 10 beklebte Träger 12 als Rolle gelagert werden.

Die Kaltkleberschicht 11 weist eine Dicke im Bereich von 5 bis 30 Mikrometer auf. Als Kaltkleber eignen sich solche, die in dieser Dicke praktisch farblos sind und das Betrachten der Beugungsstruktur 8 nicht stören.

Vorteilhaft ist der Träger 12 die klare Laminierfolie selbst, die eine durchsichtige Heisskleberschicht 13 aufweist. Die Marken 10 sind auf der Heisskleberschicht 13 mit der Kaltkleberschicht 11 aufgeklebt. Da durch die klare Laminierfolie die Marke 10 sichtbar ist, ist unmittelbar vor dem Aufkleben eine genaue Positionierung der Marke 10 auf dem Substrat 9 möglich. Die klare Laminierfolie und die Marke 10 werden in der üblichen Art mit etwa 120 bis 140°C auf das Substrat 9 laminiert, wobei sich die Heisskleberschicht 13 und die Kleberschicht 6 mit dem Substrat 9 verbinden. Nach dem Aufkleben ist die Heisskleberschicht 13 glasklar und beeinträchtigt daher das Betrachten der Beugungsstrukturen 8 (Figur 1) nicht.

Die Laminierfolie und die Heisskleberschicht 13 können eingefärbt sein und als Farbfilter wirken oder vorteilhaft auch farblos, um das auffällige Spiel der Beugungsfarben nicht zu beeinträchtigen. Wegen seiner hohen Zugfestigkeit und seiner Temperaturbeständigkeit eignet sich vorteilhaft Polyester als Material für die Laminierfolie, deren Dicke etwa 80 bis 300 Mikrometer beträgt. Die Heisskleberschicht 13 weist eine Dicke von 80 bis 300 Mikrometer auf und besteht beispielsweise aus Polypropylen.

In einer anderen Ausführung des Schichtverbunds 7 ist der Haftvermittler in der Zwischenschicht 2 (Figur 3) nicht vollflächig aufgetragen, sondern nur in Haftzonen 14. Die Haftzonen 14 bilden ein vorbestimmtes Muster auf der Stabilisationsschicht 1. Zwischenzonen 15 mit einer geringen Haftfähigkeit trennen die Haftzonen 14 voneinander. Die Zwischenschicht 2 weist nur in den Haftzonen 14 ein hohes Haftvermögen zwischen der Stabilisationsschicht 1 und der nachfolgenden Lackschicht 3 auf.

Die Zwischenzonen 15 sind vorteilhaft mit einem Trennmittel ausgefüllt, um einen guten optischen Kontakt zwischen der Stabilisationsschicht 1 und der Lackschicht 3 zu erzielen. Der Haftvermittler und das Trennmittel weisen etwa gleiche Auftragshöhen auf. Das Trennmittel verhindert in den Zwischenzonen 15 ein Haften der Stabilisationsschicht 1 auf der Lackschicht 3.

Weist die Zwischenschicht 2 ein örtlich variables Haftvermögen auf, wird beim Versuch, den Schichtverbund 7 vom Substrat 9 abzulösen, die Ablösekraft nur in den Haftzonen 14 auf die darunterliegenden Schichten 3 bis 6 übertragen. Dabei treten unterhalb der Haftzonen 14 in den Lackschichten 3 und 5 so grosse Zugkräfte auf, dass die Lackschichten 3 und 5 sowie die Reflexionsschicht 4 örtlich reissen oder überdehnt werden, wobei entweder die Beugungstrukturen 8 auf mechanischem Wege zerstört werden oder sich wenigstens als Folge der örtlichen Dehnung in auffälliger Weise irreversibel verändern. Bei einem papierenen Substrat 9 ist unterhalb der Haftzonen 14 das Herausreissen einer obersten Schicht aus der Oberfläche des Substrates 9 beim Ablöseversuch denkbar.

In einer anderen Ausführung des Schichtverbunds 7 weist die Kleberschicht 6 eine örtlich sich ändernde Haftfestigkeit auf. Sobald bei einem Ablöseversuch der Schichtverbund 7 auf Zug beansprucht wird, treten in den Schichten 3 bis 5 örtlich stark variierende Zugkräfte auf, wobei die Schichten 3 bis 5 mechanisch verändert oder zerstört werden. Die örtlich sich ändernde Haftfestigkeit der Kleberschicht 6 wird beispielsweise durch eines der nachstehend beschriebenen Verfahren erreicht.

Der Schichtverbund 7 weist ein vorbestimmtes Muster von Trenninseln 16 auf der Kleberschicht 6 (Figur 4a) auf, wobei die Auftragshöhe des in einem zusätzlichen Arbeitsgang aufgetragenen Trennmittels in den Trenninseln 16 weniger als 1 Mikrometer beträgt. Während des Aufklebens sinken die Trenninseln 16 in die heisse, weiche Kleberschicht 6 ein. Die eingesunkenen Trenninseln 16′ (Figur 4b) verhindern örtlich den Kontakt des Heissklebers mit dem Substrat 9. Teilflächen zwischen den eingesunkenen Trenninseln 16′ bilden Haftbrücken 17, in denen der Heisskleber seine volle Klebkraft entwickelt.

Das Trennmittel kann auch direkt auf die zweite Lackschicht 5 (Figur 5) im Rastermuster der Trenninseln 16 etwa 1 Mikrometer dick aufgetragen werden. Beim anschliessenden vollflächigen Aufbringen der Kleberschicht 6 werden die Trenninseln 16 überdeckt und die Haftbrücken 17 zwischen den Trenninseln 16 ausgefüllt. Nur in den Haftbrücken 17 grenzt die Kleberschicht 6 direkt an die zweite Lackschicht 5 und entwickelt dort ihr volles Haftvermögen zwischen den Schichten 5 und 6.

In einem dritten Beispiel (Figur 3) ist die Kleberschicht 6 selbst im vorbestimmten Muster auf die zweite Lackschicht 5 aufgetragen. Teilflächen mit einem Heisskleberauftrag bilden die Haftbrücken 17, die von den kleberlosen Teilflächen, den Trenninseln 16, begrenzt sind.

Als Trennmittel eignen sich z. B. wachsartige Substanzen, Silikone, schlecht haftende Lacke usw..

Der Vorteil dieser Ausführungen mit einer örtlich sich änderndenden Haftfestigkeit der Zwischenschicht 2 oder der Kleberschicht 6 ist eine zusätzliche Sicherheit gegen ein böswilliges Ablösen der Beugungsstruktur 8 vom geschützten Substrat 9, da die beim Ablöseversuch auftretenden Zugkräfte sich entsprechend dem Muster ungleichmässig ändern und Zerstörungen der Beugungsstrukturen 8 an vorbestimmten Stellen verursachen. Auch eine Kombination der obigen Ausführungen ist vorteilhaft, wenn sich sowohl in der Zwischenschicht 2 als auch in der Kleberschicht 6 das Haftvermögen örtlich ändert, da das Reissen der Schichten 3 bis 5 lässt sich durch das örtliche Haftvermögen in den beiden Schichten 2 und 6 sehr genau vorbestimmen.

Beispielsweise sind bei der Marke 10 (Figur 6) die Zwischenschicht 2 und die Kleberschicht 6 nur in einer Randzone 18 vollflächig aufgetragen, damit die Randzone 18 der Stabilisationsschicht 1 fest mit dem Substrat 9 verbunden ist und keine Angriffsmöglichkeiten zum Ablösen der Marke 10 bietet.

In einem von der Randzone 18 umschlossenen Gebiet 19 bilden die Zonen 14 (Figur 3) und 15 einerseits sowie die Trenninseln 16 und die Haftbrücken 17 andererseits ein vorbestimmtes Muster, wobei in der Kleberschicht 6 die Trenninseln 16 im Bereich der Haftzonen 14 und die Haftbrücken 17 im Bereich der Zwischenzonen 15 angeordnet sind. Beim Ablöseversuch reissen die Lackschichten 3 und 5 längs den Grenzen zwischen den Haftzonen 14 und den Zwischenzonen 15, da die Lackschichten 3 und 5 in den Haftzonen 14 stärker an der Stabilisationsschicht 1 als am Substrat 9 haften, während sie im Bereich der Zwischenzonen 15 fest mit dem Substrat 9 verbunden sind, jedoch sich leicht von der Stabilisationsschicht 1 lösen. Auf dem Dokument bleiben daher Reste des Schichtverbundes 7 im Bereich der Haftbrücken 17 zurück.

Weist das Muster der Zwischenschicht 2 als Haftzonen 14 Umrisse von Zeichen oder von Buchstaben auf, die beispielsweise ein Wort darstellen, weist die abgelöste Marke 10 ein gut sichtbares Mal auf, das irreversibel auf einen Fälschungsversuch hinweist. Auf dem Substrat 9 bleibt das durch die Haftbrücken 17 vorbestimmte Negativ des Musters zurück.

Insbesondere eignet sich die Marke 10 (Figur 6) vorteilhaft zum Sichern einer in einen Ausweis 20 eingeklebten Photographie 21 z. B. des Inhabers. Anstelle eines leicht fälschbaren Aufdrucks des Amtsstempels oder einer Prägung des Amtssiegels ist die Marke 10 über benachbarte Teilflächen des Ausweises 20 und der Photographie 21 angeordnet. Die eine Teilfläche der Kleberschicht 6 ist mit der Photographie 21 und die andere Teilfläche mit dem Substrat 9 des Ausweises 20 fest verbunden. Vorteilhaft erfolgt diese Verbindung unter Anwendung von Wärme während des Auflaminierens der als Träger 12 dienenden klaren Laminierfolie, die z. B. den ganzen Ausweis abdeckt.

## Patentansprüche

1. Mit optischen Mustern versehener Schichtverbund, bei dem eine ein Relief bildende Reflexionsschicht (4) zwischen Kunststoffschichten (3, 5) angeordnet und der Schichtenverbund mit einer transparenten Abdeckschicht überzogen ist und bei dem eine bei Aktivierungstemperaturen thermisch aktivierbare Kleberschicht (6) zum Verbinden des Schichtverbunds mit einem Substrat (9) dient,
**dadurch gekennzeichnet,**
daß die Reflexionsschicht (4) zwischen den Kunststoffschichten (3, 5) mit optischen Beugungsstrukturen (8) versehen ist, daß für die Abdeckschicht eine Stabilisationsschicht (1) verwendet ist, die folgende Bedingungen erfüllt:
a) Die Schichtdicke beträgt mindestens 9 »m und
b) das Material ist derart wärmebeständig, daß eine im wesentlichen gleichmäßige Erwärmung der Kleberschicht (6) durch den Schichtverbund hindurch auf den Bereich von deren Aktivierungstemperatur ermöglicht ist,
daß die Kunststoffschichten (3, 5) aus einem Material bestehen, das zur Zerstörung der Beugungsstrukturen (8) erst bei Zerstörungstemperaturen oberhalb der Aktivierungstemperatur der Kleberschicht (6) führt, und
daß sich die Kleberschicht (6) erst bei Temperaturen oberhalb der Zerstörungstemperatur vom Substrat (9) wieder löst.

2. Schichtverbund nach Anspruch 1,
**dadurch gekennzeichnet**,
daß für die Kleberschicht ein Material verwendet ist, das bei Erwärmen ab etwa 110 °C thermisch aktivierbar ist und das bei Temperaturen von mehr als 170 °C seine Haftkraft in Bezug zum Substrat (9) verliert.

3. Schichtverbund nach Anspruch 1 oder 2,
**dadurch gekennzeichnet**,
daß thermoplastische Schichten als Kunststoffschichten (3, 5) verwendet sind.

4. Schichtverbund nach Anspruch 3,
**dadurch gekennzeichnet,**
daß für die Reflexionsschicht (4) bzw. deren benachbarte Kunststoffschichten (3, 5) ein Material verwendet ist, das bei Zerstörungstemperaturen zwischen 150 und 160 °C zum thermischen Zerstören der Beugungsstrukturen (8) führt.

5. Schichtverbund nach einem der Ansprüche 1 bis 4, dadurch gekennzeichnet, dass die Stabilisationsschicht (1) und die erste Lackschicht (3) mittels einer Zwischenschicht (2) verbunden sind und dass die Zwischenschicht (2) in wenigstens einer Haftzone (14) aus einem Haftvermittler besteht, der eine dauerhafte Verbindung zwischen der Stabilisationsschicht (1) und der ersten Lackschicht (3) vermittelt.

6. Schichtverbund nach Anspruch 5, dadurch gekennzeichnet, dass die Zwischenschicht (2) ein vorbestimmtes Muster mit einer Vielzahl von Haftzonen (14) aufweist, die durch Zwischenzonen (15) getrennt sind und dass die Zwischenschicht (2) in den Haftzonen (14) den Haftvermittler und in den Zwischenzonen (15) ein Trennmittel aufweist..

7. Schichtverbund nach einem der Ansprüche 1 bis 6, dadurch gekennzeichnet, dass die Kleberschicht (6) ein vorbestimmtes Muster von Trenninseln (16) und Haftbrücken (17) aufweist.

8. Schichtverbund nach einem der Ansprüche 1 bis 7, dadurch gekennzeichnet, dass die Stabilisationsschicht (1) eine Kaltkleberschicht (11) auf der von der Lackschicht (3) abgewandten Seite aufweist und dass Marken (10) mit wenigstens einer Beugungsstruktur (8) mittels der Kaltkleberschicht (11) wieder lösbar mit einer mit Silikon beschichteten Trägerfolie (12) verbunden sind und dass auf der Trägerfolie (12) die Marken (10) in einer vorbestimmten Ordnung und Orientierung angeordnet sind.

9. Schichtverbund nach einem der Ansprüche 1 bis 7, dadurch gekennzeichnet, dass die Stabilisationsschicht (1) eine Kaltkleberschicht (11) auf der von der Lackschicht (3) abgewandten Seite aufweist, dass eine Trägerfolie (12) als Laminierfolie einseitig mit einer Heisskleberschicht (13) zum Heisslaminieren beschichtet ist, dass Marken (10) mit wenigstens einer Beugungsstruktur (8) in einer vorbestimmten Ordnung und Orientierung mittels der Kaltkleberschicht (11) mit der Heisskleberschicht (13) verbunden und zum gemeinsamen Heisslaminieren mit der Trägerfolie (12) auf das Substrat (9) eingerichtet sind.

10. Schichtverbund nach Anspruch 8, dadurch gekennzeichnet, dass die Trägerfolie (12) eine klare Polyesterfolie ist.

11. Verwendung eines Schichtverbundes nach einem der Ansprüche 1 bis 7 zum Sichern eines Ausweises, dadurch gekennzeichnet, dass eine Marke (10) mit den Beugungsstrukturen (8) ausgeschnitten wird, dass die Marke (10) über benachbarte Teilflächen des Ausweises (20) und einer in den Ausweis (20) eingeklebten Photographie (21) angeordnet wird und dass die eine Teilfläche der Kleberschicht (6) der Marke (10) mit der Photographie (21) und die andere Teilfläche mit dem Substrat (9) des Ausweises (20) unter Anwendung von Wärme fest verbunden wird.

12. Verwendung eines Schichtverbundes (7) nach Anspruch 9 oder 10 zum Sichern eines Ausweises, dadurch gekennzeichnet, dass die Trägerfolie (12) mit der Seite der Marke (10) und der Heisskleberschicht (13) gegen den Ausweis (20) gerichtet und die Marke (10) auf den zu sichernden Teil des Ausweises (20) ausgerichtet angeordnet wird und dass die Heisskleberschicht (13) durch die Trägerfolie (12) und die Kleberschicht (6) durch die Trägerfolie (12) und die Marke (10) hindurch erwärmt und fest mit dem Substrat (9) des Ausweises (20) so verbunden wird, dass der ganze Ausweis (20) mit der Trägerfolie (12) abgedeckt wird.

## Claims

1. A laminate which is provided with optical patterns and in which a reflection layer (4) forming a relief is arranged between plastics layers (3, 5) and the laminate is coated with a transparent cover layer and in which an adhesive layer (6) which can be thermally activated at activation temperatures serves to join the laminate to a substrate (9), characterised in that
the reflection layer (4) between the plastics layers (3, 5) is provided with optical diffraction structures (8),
that a stabilisation layer (1) which fulfils the following conditions is used for the cover layer:
a) the layer thickness is at least 9 »m and
b) the material is heat-resistant such that substantially uniform heating of the adhesive layer (6) through the laminate to the range of the activation temperature thereof is made possible,
the plastics layers (3, 5) comprise a material which results in destruction of the diffraction structures (8) only at destruction temperatures above the activation temperature of the adhesive layer (6), and
the adhesive layer (6) comes loose from the substrate (9) only at temperatures above the destruction temperature.

2. A laminate according to claim 1 characterised in that the material used for the adhesive layer is a material which upon being heated can be thermally activated from about 110°C and which loses its adhesion in relation to the substrate (9) at temperatures of more than 170°C.

3. A laminate according to claim 1 or claim 2 characterised in that thermoplastic layers are used as the plastics layers (3, 5).

4. A laminate according to claim 3 characterised in that the material used for the reflection layer (4) or its adjacent plastics layers (3, 5) is a material which at destruction temperatures of between 150 and 160°C results in the thermal destruction of the diffraction structures (8).

5. A laminate according to one of claims 1 to 4 characterised in that the stabilisation layer (1) and the first lacquer layer (3) are joined by means of an intermediate layer (2) and that in at least one adhesion zone (14) the intermediate layer (2) comprises a bonding agent which provides a durable join between the stabilisation layer (1) and the first lacquer layer (3).

6. A laminate according to claim 5 characterised in that the intermediate layer (2) has a predetermined pattern with a plurality of adhesion zones (14) which are separated by intermediate zones (15) and that the intermediate layer (2) has the bonding agent in the adhesion zones (14) and a separation agent in the intermediate zones (15).

7. A laminate according to one of claims 1 to 6 characterised in that the adhesive layer (6) has a predetermined pattern of separation islands (16) and adhesion bridges (17).

8. A laminate according to one of claims 1 to 7 characterised in that the stabilisation layer (1) has a cold-adhesive layer (11) on the side remote from the lacquer layer (3) and that tags (10) with at least one diffraction structure (8) are releasably joined by means of the cold-adhesive layer (11) to a carrier foil (12) which is coated with silicone, and that the tags (10) are disposed in a predetermined order and orientation on the carrier foil (12).

9. A laminate according to one of claims 1 to 7 characterised in that the stabilisation layer (1) has a cold-adhesive layer (11) on the side remote from the lacquer layer (3), that a carrier foil (12) is coated as a lamination foil on one side with a hot-adhesive layer (13) for hot lamination, that tags (10) with at least one diffraction structure (8) are joined to the hot-adhesive layer (13) in a predetermined order and orientation by means of the cold-adhesive layer (11) and are adapted for joint hot lamination with the carrier foil (12) on to the substrate (9).

10. A laminate according to claim 8 or claim 9 characterised in that the carrier foil (12) is a clear polyester foil.

11. Use of a laminate according to one of claims 1 to 7 for safeguarding a pass characterised in that a tag (10) with the diffraction structures (8) is cut out, that the tag (10) is arranged over adjacent surface portions of the pass (20) and of a photograph (21) which is glued into the pass (20) and that the one surface portion of the adhesive layer (6) of the tag (10) is fixedly joined to the photograph (21) and the other surface portion is fixedly joined to the substrate (9) of the pass (20), with the application of heat.

12. Use of a laminate (7) according to claim 9 or claim 10 for safeguarding a pass characterised in that the carrier foil (12) is directed with the side of the tag (10) and the hot-adhesive layer (13) towards the pass (20) and the tag (10) is arranged in aligned relationship with the part of the pass (20), that is to be safeguarded, and that the hot-adhesive layer (13) is heated through the carrier foil (12) and the adhesive layer (6) is heated through the carrier foil (12) and the tag (10), and fixedly joined to the substrate (9) of the pass (20) so that the entire pass (20) is covered with the carrier foil (12).

## Revendications

1. Stratifié pourvu de dessins optiques, dans lequel une couche de réflexion (4) formant un relief est disposée entre les couches de matière synthétique (3, 5), le stratifié étant revêtu d'une couche de recouvrement transparente, et dans lequel une couche d'adhésif (6) thermiquement activable à des températures d'activation sert à relier le stratifié à un substrat (9),
caractérisé en ce que la couche de réflexion (4) située entre les couches de matière synthétique (3, 5) est pourvue de structures optiques à diffraction (8), en ce que, pour la couche de recouvrement, on utilise une couche de stabilisation (1) qui remplit les conditions suivantes :
a) l'épaisseur de couche est d'au moins 9 »m et,
b) la matière est résistante à la chaleur de telle façon qu'un chauffage sensiblement uniforme de la couche d'adhésif (6) à travers le stratifié soit possible dans la gamme de sa température d'activation,
en ce que les couches de matière synthétique (3, 5) sont constituées d'une matière qui permet une destruction des structures de diffraction (8) uniquement à des températures de destruction situées au-dessus de la température d'activation de la couche d'adhésif (6), et en ce que la couche d'adhésif (6) se détache à nouveau du substrat (9) uniquement à des températures situées au-dessus de la température de destruction.

2. Stratifié suivant la revendication 1, caractérisé en ce que, pour la couche d'adhésif, on utilise une matière qui est thermiquement activable lors d'un chauffage à partir d'environ 110°C et qui perd sa force d'adhésion par rapport au substrat (9) à des températures supérieures à 170°C.

3. Stratifié suivant l'une des revendications 1 et 2, caractérisé en ce qu'on utilise des couches thermoplastiques comme couches de matière synthétique (3, 5).

4. Stratifié suivant la revendication 3, caractérisé en ce que, pour la couche de réflexion (4) ou ses couches de matière synthétique voisines, on utilise une matière qui, à des températures de destruction comprises entre 150 et 160°C, provoque une destruction thermique des structures de diffraction (8).

5. Stratifié suivant l'une des revendications 1 à 4, caractérisé en ce que la couche de stabilisation (1) et la première couche de vernis (3) sont reliées au moyen d'une couche intermédiaire (2) et en ce que la couche intermédiaire (2) est constituée, au moins dans une zone d'adhésion (14), d'un agent adhérisant qui procure une liaison durable entre la couche de stabilisation (1) et la première couche de vernis (3).

6. Stratifié suivant la revendication 5, caractérisé en ce que la couche intermédiaire (2) présente un dessin prédéterminé ayant un grand nombre de zones d'adhésion (14) qui sont séparées par des zones intermédiaires (15), et en ce que la couche intermédiaire (2) présente dans les zones d'adhésion (14) l'agent adhérisant et dans les zones intermédiaires (15) un agent séparateur.

7. Stratifié suivant l'une des revendications 1 à 6, caractérisé en ce que la couche d'adhésif (6) présente un dessin prédéterminé d'îlots séparateurs (16) et de ponts adhésifs (17).

8. Stratifié suivant l'une des revendications 1 à 7, caractérisé en ce que la couche de stabilisation (1) présente une couche de colle à froid (11) du côté disposé à l'opposé de la couche de vernis (3) et en ce que des marques (10) présentant au moins une structure de diffraction (8) sont reliées d'une manière à nouveau détachable, au moyen de la couche de colle à froid (11), à une feuille de support (12) enduite de silicone et en ce que, sur la feuille de support (12), les marques (10) sont agencées dans un ordre et une orientation prédéterminés.

9. Stratifié suivant l'une des revendications 1 à 7, caractérisé en ce que la couche de stabilisation (1) présente une couche de colle à froid (11) du côté situé à l'opposé de la couche de vernis (3), en ce qu'une feuille de support (12) est, en tant que feuille de laminage, enduite d'un côté d'une couche de colle à chaud (13) pour effectuer un laminage à chaud, en ce que des marques (10) présentant au moins une structure de diffraction (8) sont reliées à la couche de colle à chaud (13) au moyen de la couche de colle à froid (11), dans un ordre et une orientation prédéterminés, et en ce qu'elles sont disposées pour un laminage à chaud commun avec la feuille de support (12) sur le substrat (9).

10. Stratifié suivant l'une des revendications 8 et 9, caractérisé en ce que la feuille de support (12) est une feuille de polyester limpide.

11. Utilisation d'un stratifié suivant l'une des revendications 1 à 7, pour assurer une pièce d'identité, caractérisée en ce qu'une marque (10) est découpée avec les structures de diffraction (8), en ce que la marque (10) est agencée sur des surfaces partielles voisines de la pièce d'identité (20) et d'une photographie (21) collée dans la pièce d'identité (20) et en ce que l'une des surfaces partielles de la couche d'adhésif (6) de la marque (10) est reliée de manière fixe à la photographie (21) par application de chaleur et l'autre surface partielle au substrat (9) de la pièce d'identité (20).

12. Utilisation d'un stratifié (7) suivant l'une des revendications 9 et 10, pour assurer une pièce d'identité, caractérisée en ce que la feuille de support (12) est dirigée contre la pièce d'identité (20) avec le côté de la marque (10) et de la couche de colle à chaud (13) et en ce que la marque (10) est agencée de manière alignée sur la partie à assurer de la pièce d'identité (20), et en ce que la couche de colle à chaud (13) est chauffée à travers la feuille de support (12) et la couche d'adhésif (6) à travers la feuille de support (12) et la marque (10) et en ce qu'elles sont reliées de manière fixe au substrat (9) de la pièce d'identité (20), la totalité de la pièce d'identité (20) étant recouverte de la feuille de support (12).
